**Europäisches Patentamt**

**European Patent Office**

**Office européen des brevets**

(19)

(11) Veröffentlichungsnummer: **0 503 171 A1**

(12) # EUROPÄISCHE PATENTANMELDUNG

(21) Anmeldenummer: **91250070.9**

(22) Anmeldetag: **12.03.91**

(51) Int. Cl.5: **G11B 33/04**, B65D 85/57, G11B 23/03

(43) Veröffentlichungstag der Anmeldung: **16.09.92 Patentblatt 92/38**

(84) Benannte Vertragsstaaten: **BE DE ES FR GB IT LU NL SE**

(71) Anmelder: **Schwerdtle & Schantz GmbH Buschkrugallee 33 1000 Berlin 47(DE)**

(72) Erfinder: **Schantz, Peter Lassenstrasse 26 W-1000 Berlin 33(DE)**

(74) Vertreter: **Christiansen, Henning, Dipl.-Ing. Patentanwalt CHRISTIANSEN Pacelliallee 43/45 W-1000 Berlin 33(DE)**

(54) **Schutzhülle für einen scheibenförmigen Aufzeichnungsträger.**

(57) Schutzhülle für einen scheibenförmigen Aufzeichnungsträger, insbesondere für eine Compact-Disc, bestehend aus mindestens einer Grundfläche und reliefartigen Erhebungen außerhalb des von des Aufzeichnungsträgers eingenommenen Bereichs und mindestens einer zentralen Erhebung zur Zentrierung von dessen Mittelloch sowie mindestens einer Abdeckfläche, die im wesentlichen die Abmessungen der Grundfläche aufweist und durch eine scharnierartige Verbindung klappbar mit der Grundfläche verbunden ist, wobei die Erhebungen höher sind als die Dicke des Aufzeichnungsträgers, bei dem mindestens die Grundfläche aus Karton besteht und mit dieser Fläche eine tiefgezogene oder geprägte durch die Formgebung und die Befestigung an der Grundfläche im Bereich der Erhebungen eigensteife Kunststoff-Folie (10) verbunden ist, in welche die mindestens eine zentrale Erhebung (14) sowie die reliefartigen Erhebungen außerhalb des von dem Aufzeichnungsträger eingenommenen Bereichs durch den Tiefziehvorgang eingeformt sind, so daß die Folie mit im wesentlichen konstanter Dicke die vollständige Aufnahme für den Aufzeichnungsträger bildet.

Fig.1

Die Erfindung betrifft eine Schutzhülle für einen scheibenförmigen Aufzeichnungsträger der im Oberbegriff des Anspruchs 1 angegebenen Art.

Eine derartige als Snapbox bezeichnete Schutzhülle, wie sie üblicherweise für CDs Verwendung findet, ist aus der DE-A-33 01 644 in Form einer Kunststoffklappkassette bekannt. Um den Aufzeichnungsträger vor einer oben aufgeführten Beschädigung zu schützen, ruht er ausschließlich mit seiner informationsfreien Fläche auf einer erhöhten zentralen Auflage. Weiterhin sind, um zu verhindern, daß der Aufzeichnungsträger beim Öffnen der Kassette durch Aufklappen aus dem Kunststoffeinsatz herausfällt, die reliefartigen Erhebungen im zentralen Bereich des Kunststoffeinsatzes derart ausgebildet, daß sie den Aufzeichnungsträger in seinem zentralen Loch klemmend halten.

Eine derartige Ausführung ist jedoch aufwendig in der Herstellung und erfordert einen relativ großen Material- und Herstellungsaufwand, da die Klappkassette und der in die Klappkassette einzubringende Kunststoffeinsatz aus hochwertigem Kunststoffen hergestellt werden. Zudem müssen beide mit hohen Maßgenauigkeiten angefertigt werden, um das Einrasten des Kunststoffeinsatzes in die Klappkassette zu gewährleisten. Weiterhin hat sich die als Klemmvorrichtung gestaltete Zapfenanordnung als nachteilig erwiesen, da diese derart einklemmend auf den scheibenförmigen Aufzeichnungsträger wirkt, daß es schwierig ist, den Aufzeichnungsträger aus der Klappkassette zu entnehmen, ohne daß die seitlichen Bereiche des Aufzeichnungsträgers, die bei der Entnahme angefaßt werden, sich schneller als der eingeklemmte zentrale Bereich entfernen lassen, so daß es zu einer unerwünschten Biegebeanspruchung des Aufzeichnungsträgers führt. Ein Aufzeichnungsträger, der oft aus einer derartigen Klappkassette entnommen oder eingelegt wird, kann also mit der Zeit Ermüdungserscheinungen aufweisen, da er zu stark beansprucht wird. Auch ein gegebenenfalls in der Klappcassette in speziellen Aufnahmenoppen gegebenenfalls vorgesehenes Beiheft läßt sich nur schwer entnehmen. Sämtliche dekorativen Elemente sind als Druckerzeugnis in die transparente Hülle von innen einzulegen, damit die entsprechenden Bereiche von außen her sichtbar sind.

Diese bekannte Umhüllung ist jedoch kostenaufwendig in der Herstellung und läßt sich nur ebenso aufwendig entsorgen. Es wurden zwar verschiedentlich Versuche unternommen, derartige Umhüllungen preiswert aus Karton herzustellen. Diese weisen jedoch den Nachteil auf, daß sie wegen ihrer geringeren Stärke nicht die für die üblichen Umhüllungen vorgesehenen und eingebürgerten Verkaufsständer ausfüllen. Ferner werden sie vom Kunden nur unzureichend akzeptiert, da sie als minderwertiges Produkt angesehen werden.

Der Erfindung liegt die Aufgabe zugrunde, die - insbesondere nach Art eines Buchdeckels aufklappbare - Schutzhülle für einen scheibenförmigen Aufzeichnungsträger, die eine Gesamtdicke aufweist so daß sie in den im Handel verwendeten Verkaufs- und Aufbewahrungsständern paßt, derart weiterzubilden, daß die Umhüllung im wesentlichen aus einem einheitlichen folienförmigen Material und die in der Umhüllung angeordnete Einlage aus Kunststoff, insbesondere recyclingfähigen Werkstoff herstellbar ist, wobei der Aufzeichnungsträger vom Benutzer sicher gegriffen und leicht zur Benutzung herausgeführt werden können soll.

Diese Aufgabe wird durch die im kennzeichnenden Teil des Anspruchs 1 angegebenen Merkmale gelöst.

Die Erfindung beruht auf der Erkenntnis, daß sich durch die Kombination: tiefgezogene oder geprägte Kunststoff-Folie einerseits und Kartonumhüllung mit Doppelfalz andererseits als Verbundwerkstoff eine Umhüllung ergibt, die nach außen hin sämtliche Werbeaussagen oder Abbildungen zum Inhalt der Aufzeichnung in gedruckter Form enthalten kann. Hierbei stehen die üblichen grafischen Methoden in großer Vielfalt zur Verfügung. Die äußere Umhüllung aus Karton gibt der Schutzhülle die erwünschten äußeren Abmessungen. Die innere Aufnahme für den Aufzeichnungsträger einschließlich Zentrierung und einen Abstandshalter die Kartondeckflächen bildet die tiefgezogene oder geprägte Kunststoff-Folie, wie sie beispielsweise für becherartige Behältnisse in der Lebensmittelindustrie verwendet wird. Eine Bedruckung, die in aller Regel nur aufwendig und mit Qualitätseinbußen erfolgen kann, ist entbehrlich. Die Kunststoff-Folie ist in ihren nicht erhabenen Bereichen flächig an die Kartonumhüllung angeklebt - oder in sonstiger Weise mit ihr verbunden. Damit erhalten die erhabenen Bereiche auch bei geringer Folienstärke eine große Festigkeit.

Auf diese Weise wird eine Verpackung geschaffen, welche der ursprünglichen Kunststoff-Spritzausführung in Form, Funktion und Wertigkeit aus der Sicht des Verbrauchers vollständig entspricht, darüber hinaus aber wesentlich kostengünstiger auch vollautomatisiert herstellbar ist. Wegen der größeren Hohlräume ist insgesamt ein geringerer Materialeinsatz notwendig. Dazu kommt, daß das verwendete Material einerseits bereits recycled sein kann, andererseits aber auch selbst wieder recyclingfähig ist.

Besonders vorteilhaft bei der Erfindung ist die Tatsache, daß sich die Grund- und Abdeckflächen, die die eigentliche Umhüllung der erfindungsgemäßen Schutzhülle bilden, aus Kartonmaterial bestehen und somit durch eine für übliche Verpackungsmaterialien (Faltkartons, Umhüllungen und dergleichen) geeignete Fertigungsvorrichtung herstellen lassen. Eine derartige Fabrikation ist kostengünstig und die einzelnen Grund- und Abdeckflächen können mit Informationstexten bedruckt werden. Die Einlage, bestehend aus Kunststoff, insbesondere Recycling-Kunststoff, ist auf der Innenseite einer Grundfläche angeordnet und ist im zentralen Bereich mit einer kleinen Anzahl von reliefartigen Erhebungen in Form von Noppen versehen, die einerseits die zentrierte Position des Aufzeichnungsträgers in der Schutzhülle sichern, aber andererseits dessen Herausnahme erleichtern, in dem diese Noppen nur geringfügig klemmend wirken. Die Flächenteile der Noppen - es sind höchstens vier - die am weitesten von der Einlagenmitte entfernt angeordnet sind, verlaufen im oberen Bereich derart kreisförmig, daß sie Bereiche eines Kreises aufzeichnen, der einen größeren Durchmesser als der Durchmesser des zentralen Lochs des Aufzeichnungsträgers aufweist. Im unteren Bereich dagegen verlaufen diese Flächenteile derart, daß sie Bereiche eines Kreises aufzeichnen, der einen kleineren Durchmesser als der Durchmesser des zentralen Lochs des Aufzeichnungsträgers aufweist. Dadurch, daß nur eine geringe Anzahl an Noppen verwendet werden, und daß die Noppen nur im oberen Bereich einen Durchmesser aufzeichnen, der geringfügig größer ist als der Durchmesser des zentralen Lochs des Aufzeichnungsträgers, wird dieser zwar sicher in der Schutzhülle gehalten, kann aber auch sehr leicht entnommen werden.

Zudem weist die Einlage Erhebungen im Randbereich auf, die eine Höhe aufweisen, die die erwünschte Gesamtdicke der Schutzhülle abzüglich der beidseitig angeordneten Grund- und Abdeckflächen im zugeklappten Zustand entsprechen und deren Ränder zumindest bereichsweise die kreisförmige Form des Aufzeichnungsträgers entsprechen. Somit paßt die erfindungsgemäße Schutzhülle in die im Handel verwendeten Verkaufs-und Aufbewahrungsständer, ist aber gleichzeitig wesentlich kostengünstiger in der Herstellung bei gleichzeitiger umweltschonender Wiederverwertung von Kunststoffen und/oder Papier und ist zudem, durch das Bedrucken der Grund- und Abdeckflächen, optisch attraktiv gestaltbar.

Die Grundfläche, auf der die Einlage angeordnet ist, kann nun ihrerseits direkt mit weiteren Grundflächen zur Aufnahme von Aufzeichnungsträgern verbunden sein oder aber über einen flexiblen Falz mit einer Abdeckfläche verschlossen werden, die im wesentlichen mit den Abmessungen der Grundfläche, auf der die Einlage angeordnet ist übereinstimmt und den Aufzeichnungsträger durch Zuklappen vollständig verschließt und gegen äußere Einwirkung sichert. Die erfindungsgemäße Lösung kann in den verschiedensten Ausführungsformen zum Einsatz kommen. So können auch mehrere Grundflächen, auf denen jeweils eine Einlage zur Aufnahme von Aufzeichnungsträgern angeordnet ist, über Falze getrennt aneinander anschließen, so daß sich durch Aufeinanderklappen der Bereiche eine Schutzhülle für mehrere Aufzeichnungsträger bilden läßt.

Bei einer bevorzugten vorteilhaften Weiterbildung der Erfindung sind zwei sich gegenüberliegenden Seiten der Grundfläche, die nicht mit einer Abdeckfläche klappbar verbunden sind, mit im wesentlichen halbkreisförmigen Ausnehmungen versehen. Die auf einer derartigen Grundfläche aufzubringende Einlage weist auch entsprechende Ausnehmungen auf. Diese Ausnehmungen dienen zur wesentlichen Erleichterung bei der Herausnahme eines Aufzeichnungsträgers aus der Schutzhülle. Die Schutzhülle weist zum Schutz des Aufzeichnungsträgers eine weitere Abdeckfläche auf, die mit der ersten durch einen Doppelfalz verbunden ist. Die erste Abdeckfläche dient zur Abdeckung des Aufzeichnungsträgers und die weitere anschließende Abdeckfläche dient zur Abdeckung der Ausnehmungen aufweisenden Grundfläche.

Bei einer weiteren vorteilhaften Weiterbildung der Erfindung sind die Innenseiten der Abdeckflächen, auf denen Einlagen nicht angeordnet sind, mit Einstecktaschen für Informationsmaterial ausgebildet. Diese Einstecktaschen, die als weitere Deckflächen ausgebildet sind, sind kleiner als die Abdeckfläche und werden, nachdem sie auf die Abdeckfläche umgeklappt worden sind, nur in den Randbereichen mit der Abdeckfläche durch Kleben verbunden.

Zusätzliche Einstecktaschen und/oder Broschüren können aber auch auf einer freien Abdeckfläche geklebt werden. Alle klappbaren Grund-, Abdeck- und Deckflächen der erfindungsgemäßen Schutzhülle können vor der Anordnung der Einlagen beidseitig bedruckt werden, so daß eine Vielzahl von Gestaltungsmöglichkeiten vorhanden sind.

Insbesondere lassen sich auch nahezu beliebige Konfigurationen für die Aufbewahrung unterschiedlicher Anzahlen von Aufzeichnungsträgern erzeugen. So sind bevorzugt die Grundflächen zur Aufnahme zweier oder mehrerer Aufzeichnungsträger in einer Ebene nebeneinander vorgesehen und/oder die Grundflächen zur Aufnahme jeweils mindestens eines Aufzeichnungsträgers seitlich benachbart aneinandergrenzend und durch einen Falz oder eine sonstige scharnierartige Verbindung miteinander verbunden ausgebildet. Mindestens zwei Abdeckflächen von der Größe einer Grundfläche sind bevorzugt durch einen Falz oder eine sonstige scharnierartige Verbindung miteinander verbunden. Auch kann die Abdeckfläche mit einer angefügten Broschüre oder einer Einstecktasche oder eine Grundfläche beidseitig mit einer Deckfläche zur Aufnahme jeweils eines Aufzeichnungsträgers versehen sein. Eine Mehrzahl von Schutzhüllen lassen sich zu einem Buch binden.

Auf diese Weise lassen sich mit der erfindungsgemäßen Schutzhüllen alle marktgängigen Konfigurationen von CD-Umhüllungen nachbilden und darüberhinaus auch neue Zusammenstellungen bilden, welche insbesondere darin bestehen, daß sich CDs aufnehmende Flächen zusammen mit Abbildungen aufweisenen Kartonflächenteilen zu einem abwechslungsreichen Mosaik auffalten lassen, welches in geöffnetem Zustand großflächig dekorativen Charakter hat und zusätzlich dem Wunsch der Benutzer nach dem Besitz von die jeweiligen Interpreten oder Komponisten kultartig herausstellenden Gegenständen entgegenkommt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 eine Draufsicht eines ersten Ausführungsbeispiels einer erfindungsgemäßen Schutzhülle zur Aufnahme eines Aufzeichnungsträgers im aufgeklappten Zustand,

Figur 2 einen Längschnitt der erfindungsgemäßen Schutzhülle gemäß Figur 1 im zusammengeklappten Zustand,

Figur 3 eine Draufsicht einer anderen Ausführungsform einer erfindungsgemäßen Schutzhülle im aufgeklappten Zustand mit integrierter Einstecktasche vor dem Zusammenkleben,

Figur 4 eine Draufsicht der Ausführungsform gemäß Figur 3 nach dem Aufkleben im aufgeklappten Zustand,

Figur 5 eine Draufsicht einer weiteren Ausführungsform

Figur 6 einen Längsschnitt der Schutzhülle gemäß Figur 5 im zusammengeklappten Zustand, sowie

Figur 7 eine Draufsicht einer weiteren Ausführungsform zur Aufnahme von zwei Aufzeichnungsträgern.

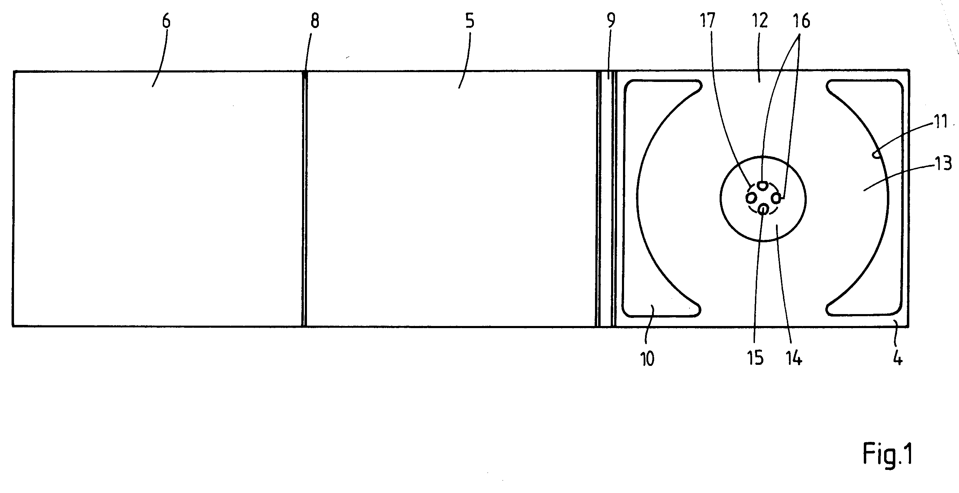

Bei der in der Figur 1 dargestellten Ausführung einer erfindungsgemäßen Schutzhülle zur Aufnahme eines Aufzeichnungsträgers 1 (in Figur 3 dargestellt), ist eine reliefartige Erhebung, die als geprägte oder teifgezogene Kunststoff-Folie gestaltete Einlage 10 ausgebildet ist, auf einer Grundfläche 4 durch Klebung oder in sonstiger Weise flächig befestigt. Die Grundfläche 4 ist über einen Doppelfalz 9 mit einer seitlich angebrachten flexiblen umklappbaren Abdeckfläche 5 verbunden und diese ist wiederum über einen Falz 8 mit einer weiteren seitlich angebrachten flexiblen umklappbaren Abdeckfläche 6 verbunden. Der Abstand zwischen den einzelnen Falzen des Doppelfalzes 9 entspricht die Gesamtdicke der Schutzhülle nach dem Zusammenklappen. Die Grundfläche 4, die Falze 8, 9 und die Abdeckflächen 5, 6 sind alle aus einem einheitlichen Material, vorzugsweise aus Karton (insbesondere Bristol-Karton), hergestellt. Die auf der Grundfläche 4 aufgebrachte Einlage 10, bildet ein Formteil, welches aus Kunststoff, insbesondere Recycling-Kunststoff, besteht.

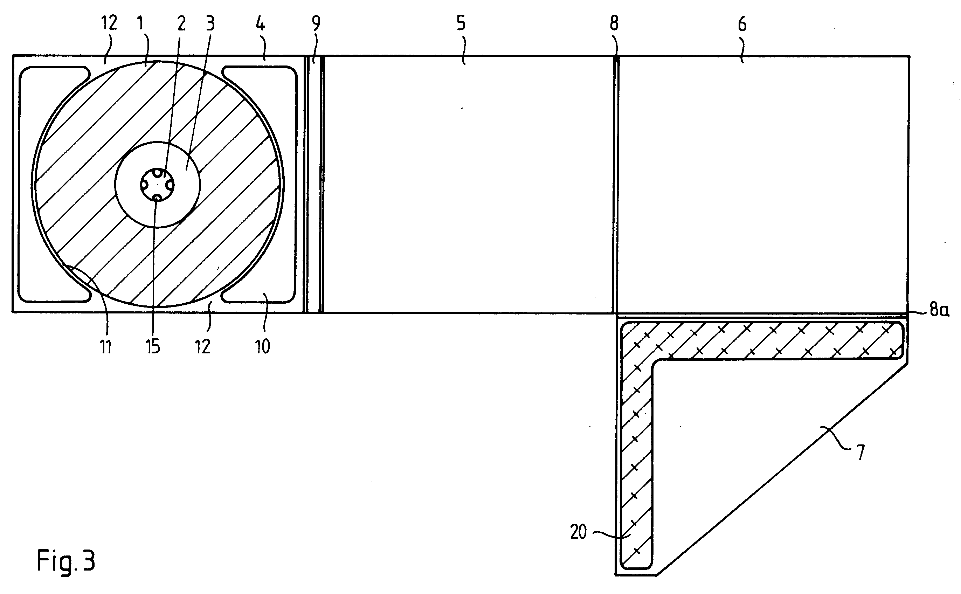

Die Umhüllung entspricht in geschlossenem Zustand der Form der bekannten Snap-Boxen von CDs. Die Einlage 10 weist eine im wesentlichen kreisförmige Kante 11 auf, die an zwei sich gegenüberliegenden Seiten Unterbrechungen 12 aufweist und die bei der Aufnahme bzw. Entnahme des Aufzeichnungsträgers 1 als Führung dienen. Der Boden 13 der Einlage 10 weist im zentralen Bereich eine kreisförmige Erhöhung 14 auf, die im wesentlichen der Größe des informationsfreien Mittenbereichs 3 des Aufzeichnungsträgers 1 (in Figur 2 dargestellt) entspricht. Auf dieser kreisförmigen Erhöhung 14 ist eine Zentriervorrichtung für den Aufzeichnungsträger 1 angeordnet. Diese wird zusätzlich anhand der Figur 2 beschrieben und besteht aus vier Noppen 15, deren Flächenteile 16, die am weitesten von der Einlagenmitte angeordnet sind, im oberen Bereich derart kreisförmig verlaufen, daß sie Bereiche eines Kreises 17 aufzeichnen, der einen größeren Durchmesser 17a als der Durchmesser des zentralen Lochs 2 (siehe Figur 3) des Aufzeichnungsträgers 1 aufweist. Im unteren Bereich verjüngen sich die Noppen 15 derart, daß die Flächenteile 16, Bereiche eines Kreises 18 aufzeichnen, der einen kleineren Durchmesser 18a als der Durchmesser des zentralen Lochs 2 des Aufzeichnungsträgers 1 aufweist.

In Figur 2 ist die Schutzhülle gemäß der Figur 1 im zusammengeklappten Zustand mit eingelegtem Aufzeichnungsträger 1 dargestellt. Beim Zusammenklappen wird die von der Einlage 10 entferntesten Abdeckfläche 6 auf die zur Einlage 10 benachbarten Abdeckfläche 5 umgeklappt, um dann beide Abdeckflächen 5, 6 gleichzeitig auf die Einlage 10 umzuklappen und den Aufzeichnungsträger 1 vollständig abzudecken. Der Doppelfalz 9, und die Form der Einlage 10 sind aus dieser Darstellung klar ersichtlich. Die seitliche Erhebung 11 der Einlage 10, weist eine Höhe auf, die der Höhe der Schutzhülle abzüglich der Dicke der Grundfläche 4, des Einlagebodens 13, sowie der Abdeckflächen 5 und 6 entspricht und ist an zwei sich gegenüberliegenden Seiten, wovon nur eine Unterbrechung 12 im Schnitt ersichtlich ist, unterbrochen. Die kreisförmige Erhöhung 14, auf der nur der informationsfreie Teil 3 des Aufzeichnungsträgers 1 liegt und drei der vier Noppen 15 der Zentriervorrichtung sind auch aus diesem Schnitt ersichtlich. Der Querschnitt der einzelnen Noppen 15 verringert sich an der entferntesten zur Einlagemitte gelegen Oberfläche in Richtung des Einlagebodens 13. Die Durchmesser 17a und 18a der Kreise 17 und 18, die von den Flächenteilen 16 aufgezeichnet werden sind auch aus dieser Figur ersichtlich.

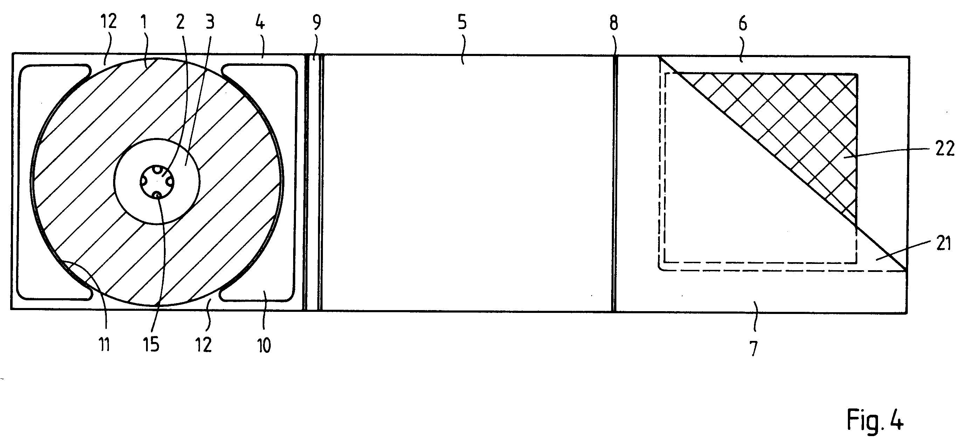

In den Figuren 3 und 4 wird eine vorteilhafte Weiterbildung der in Figur 1 dargestellten Schutzhülle gezeigt. Diese Schutzhülle weist eine integrierte Einstecktasche 21 für Informationsmaterial 22 auf, welche als weitere Deckfläche 7 ausgebildet ist, die mit einer Seite der von der Einlage 10 entferntesten Abdeckfläche 6 durch einen Falz 8a klappbar verbunden ist. Die Deckfläche 7 ist als Einstecktasche 21 ausgebildet und weist Klebebereiche 20 auf. Nach dem Umklappen der Deckfläche 7 auf die Abdeckfläche 6 werden sie miteinander verklebt (siehe Figur 4) und das Informationsmaterial 22 findet in der gebildeten Tasche 21 einen sicheren Platz.

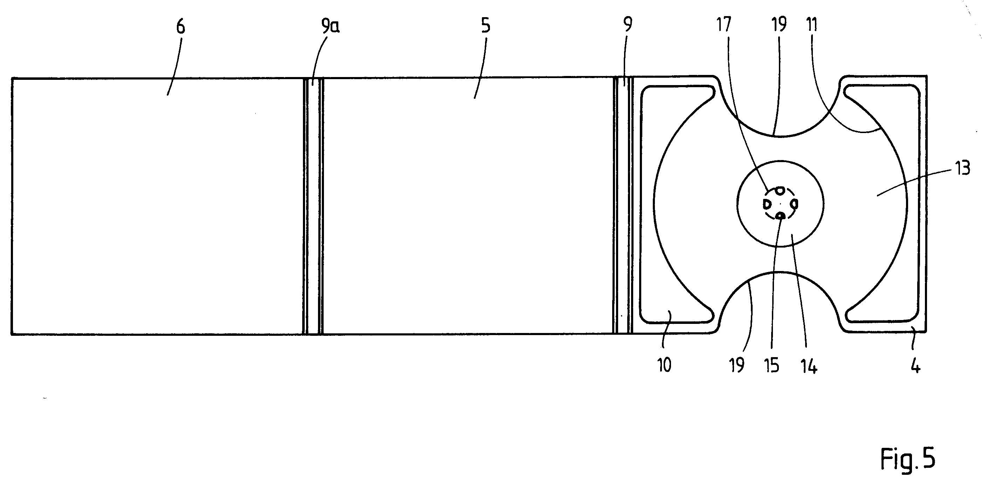

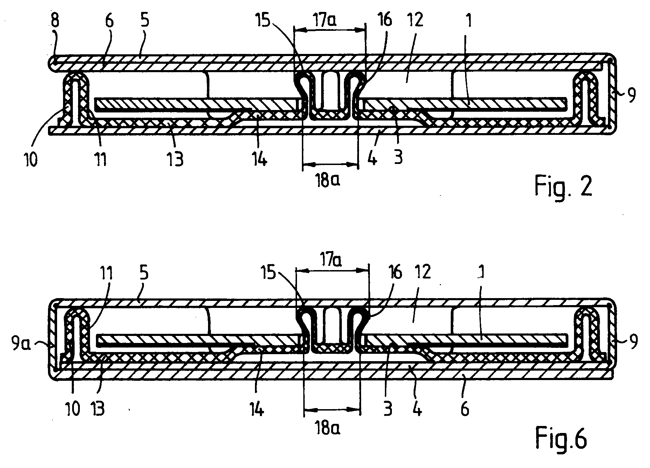

In Figur 5 ist eine weitere vorteilhafte Weiterbildung der erfindungsgemäßen Schutzhülle dargestellt. Sowohl die Grundfläche 4 als auch die auf der Grundfläche 4 angeordneten Einlage 10 weisen halbkreisförmige Ausnehmungen 19 in zwei sich gegenüberliegenden Seiten auf, die nicht mit einer Abdeckfläche 5 klappbar verbunden sind. Diese Ausnehmungen 19 ragen bis in die Fläche hinein, die vom Aufzeichnungsträger 1 überdeckt wird. Diese Ausnehmungen 19 erleichtern die Herausnahme eines Aufzeichnungsträgers 1, da man den Rand des Aufzeichnungsträgers 1 oberhalb dieser Ausnehmungen 19 besser umfassen kann. Um zu verhindern, daß die Bereiche des Aufzeichnungsträgers 1, die oberhalb der Ausnehmungen 19 angeordnet sind, von außen beschädigt werden, ist die Grundfläche 4 mit der benachbarten Abdeckfläche 5, sowie diese mit der entferntesten Abdeckfläche 6 jeweils durch einen Doppelfalz 9, 9a verbunden. Dadurch kann die entfernteste Abdeckfläche 6 zur Abdeckung der Grundfläche 4 und die benachbarte Abdeckfläche 5 zur Abdeckung der Einlage 10 verwendet werden. In der Figur 6 wird dieser zusammengefaltete Zustand dargestellt.

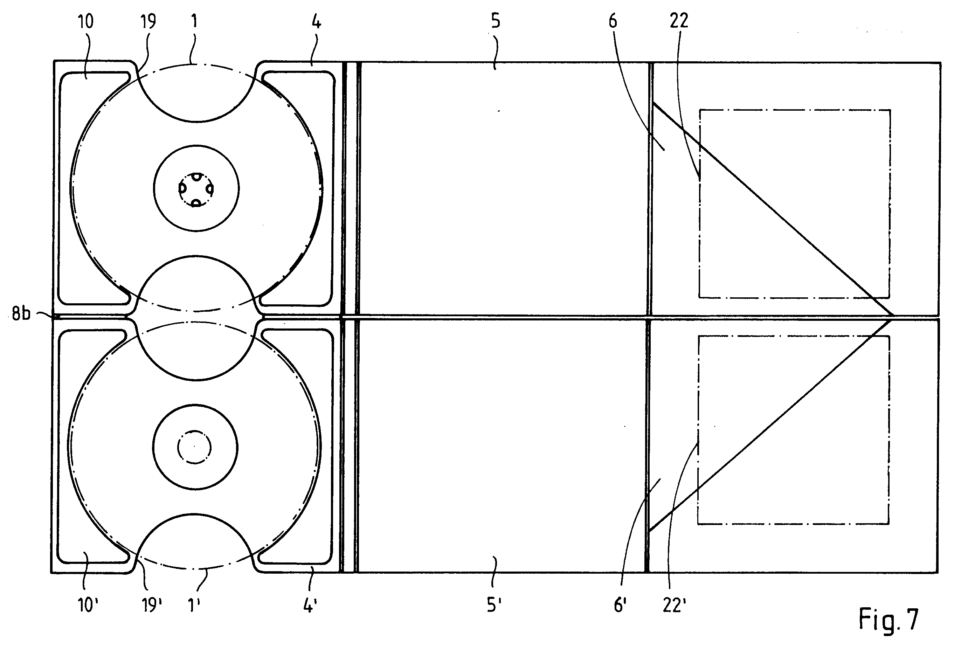

In Figur 7 ist eine weitere Ausführungsform einer Schutzhülle, die sich zur Aufnahme von zwei Aufzeichnungsträgern 1, 1' eignet, dargestellt. Im wesentlichen besteht diese Ausführungsform aus zwei Schutzhüllen gemäß der Ausführungsform, die anhand der Figur 1 beschrieben wurde, wobei die zwei Grundflächen 4, 4' durch einen Falz 8b miteinander umklappbar verbunden sind und die Grundflächen 4, 4' vorteilhafte Ausnehmungen 19, 19' gemäß der Figur 5 aufweisen. Die Grundflächen 4, 4' werden Rücken an Rücken zusammengeklappt und gegebenenfalls miteinander verklebt. Die Abdeckflächen 5, 5', 6, 6' werden dann analog der Beschreibung zur Figur 1 nacheinander umgeklappt und decken die jeweilige Einlage 10, 10' vollständig ab. Dadurch, daß die mit Ausnehmungen 19, 19' versehenen Grundflächen 4, 4' Rücken an Rücken aneinanderliegen bzw. miteinander verklebt sind, sind auch die Bereiche der Aufzeichnungsträger 1, 1', die oberhalb von den jeweiligen Ausnehmungen 19, 19' angeordnet sind, vor einer Beschädigung von außen geschützt.

Es ist ersichtlich, daß sich mit den Mitteln der Erfindung eine einfach herstellbare, aber repräsentative Verpackung für einen scheibenförmigen Aufzeichnungsträger erstellen läßt, welche alle Möglichkeiten für die Aufnahme von zusätzlichen Texten oder Darstellungen bildet. Die verschiedenen vorzusehenden umklappbaren Deckflächen der Umhüllung erhöhen den Werteindruck des so verpackten Aufzeichnungsträgers. Alle Ausführungsformen sind für alle Arten von scheibenförmigen Aufzeichnungsträgern, insbesondere CDs und Mini-CDs geeignet. Die mögliche Bedruckung oder anderweitige Veredelung der Außenoberfläche (insbesondere durch Beschichten) kann entweder ein- oder beidseitig erfolgen. Derartige Schutzhüllen sind aus wiederverwertbarem Papier und Kunststoff herstellbar, so daß sich sowohl der Bedarf an neu zu produzierendem Papier und Kunststoff als auch die anfallenden zu entsorgenden Abfallmengen von Altpapier und Kunststoffen reduzieren lassen. Bei den ansteigenden Verkaufszahlen derartiger Aufzeichnungsträger und bei dem immer größer werdenden Problem der Abfallentsorgung werden solche umweltschonende Aspekte in Zukunft auch wirtschaftlich von immer entscheidender Bedeutung sein.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Patentansprüche**

1. Schutzhülle für einen scheibenförmigen Aufzeichnungsträger, insbesondere für eine Compact-Disc, bestehend aus mindestens einer Grundfläche und reliefartigen Erhebungen außerhalb des von des Aufzeichnungsträgers eingenommenen Bereichs und mindestens einer zentralen Erhebung zur Zentrierung von dessen Mittelloch sowie mindestens einer Abdeckfläche, die im wesentlichen die Abmessungen der Grundfläche aufweist und durch eine scharnierartige Verbindung klappbar mit der Grundfläche verbunden ist, wobei die Erhebungen höher sind als die Dicke des Aufzeichnungsträgers,

   **dadurch gekennzeichnet,**

daß mindestens die Grundfläche aus Karton besteht und mit dieser Fläche eine tiefgezogene oder geprägte durch die Formgebung und die Befestigung an der Grundfläche im Bereich der Erhebungen eigensteife Kunststoff-Folie (10) verbunden ist, in welche die mindestens eine zentrale Erhebung (14) sowie die reliefartigen Erhebungen außerhalb des von dem Aufzeichnungsträger eingenommenen Bereichs durch den Tiefziehvorgang eingeformt sind, so daß die Folie mit im wesentlichen konstanter Dicke die vollständige Aufnahme für den Aufzeichnungsträger bildet.

2. Schutzhülle nach Anspruch 1, **dadurch gekennzeichnet,** daß die Kunststoff-Folie (10) mittels Verklebung oder Ultraschall-Schweißung mit der Grundfläche verbunden ist.

3. Schutzhülle nach einem der vorangehenden Ansprüche, **dadurch gekennzeichnet,** daß die Folie mindestens eine Abdeckfläche und/oder mehrere Grundflächen einschließt, welche Aufzeichnungsträger aufnehmen und klappbar miteinander verbunden sind.

4. Schutzhülle nach einem der vorangehenden Ansprüche, **dadurch gekennzeichnet,** daß die zentrale Erhebung (14) eine Anzahl von noppenartigen Erhebungen (15) aufweist, deren Flächenteile (16), die am weitesten von der Mitte der reliefartigen Erhebung (10) angeordnet sind, im oberen Bereich derart verlaufen, daß sie Bereiche eines Kreises (17) aufzeichnen, der einen größeren Durchmesser (17a) als der Durchmesser des zentralen Lochs (2) des Aufzeichnungsträgers (1) aufweist, und im unteren Bereich derart verlaufen, daß sie Bereiche eines Kreises (18) aufzeichnen, der einen kleineren Durchmesser (18a) als der Durchmesser des zentralen Lochs (2) des Aufzeichnungsträgers (1) aufweist.

5. Schutzhülle nach einem der vorangehenden Ansprüche, **dadurch gekennzeichnet,** daß die zentrale Erhebung (14) als eine geschlossene im wesentlichen pilzförmige Erhebung ausgebildet ist.

6. Schutzhülle nach einem der vorangehenden Ansprüche, **dadurch gekennzeichnet,** daß die außerhalb des von dem Aufzeichnungsträger eingenommenen Bereichs vorgesehen Erhebungen eine stufenartige Kante bilden, welche sich an den Aufzeichnungsträger und mindestens teilweise dessen Kreisform folgend im wesentlichen bündig anschließen.

7. Schutzhülle nach einem der vorangehenden Ansprüche, **dadurch gekennzeichnet,** daß die scharnierartige Verbingung als Falz oder der Doppelfalz ausgebildet ist und ebenfalls aus der Kunststoff-Folie besteht.

8. Schutzhülle nach einem der vorangehenden Ansprüche, **dadurch gekennzeichnet,** daß die Deckfläche (7) eine Einstecktasche (21) für eine Broschüre oder sonstige entsprechende flache Informationsträger (22) aufweist.

9. Schutzhülle nach einem der vorangehenden Ansprüche, **dadurch gekennzeichnet,** daß die Grund-, Abdeck- und Deckflächen (4 bis 7) aus einem einheitlichen und zusammenhängenden folienförmigen Material, insbesondere Karton, bestehen.

10. Schutzhülle nach einem der vorangehenden Ansprüche, **dadurch gekennzeichnet,** daß die Kunststoff-Folie aus einem wiederaufbereiten (Recycling-) Material besteht.

11. Schutzhülle nach einem der vorangehenden Ansprüche, **dadurch gekennzeichnet,** daß die Folie mehrschichtig ausgebildet ist, wobei die Deckschichten aus neu hergestelltem Kunststoff, eine Zwischenschicht jedoch aus wiederaufbereitetem Kunststoff besteht.

Fig.1

7

Fig.3

Fig. 4

Fig. 5

EP 0 503 171 A1

EP 0 503 171 A1

Fig. 2

Fig.6

11

Fig.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4709812 (DONALD W. KOSTERKA) <br> * Spalte 2, Zeile 22 - Spalte 3, Zeile 25; Figuren 1, 2 * | 1-3 | G11B33/04 <br> B65D85/57 <br> G11B23/03 |
| A | | 4 | |
| Y | US-A-4327831 (SHOSEI INABA ET AL) <br> * Spalte 2, Zeile 58 - Spalte 3, Zeile 68; Figuren 2-6 * | 1-3 | |
| A | | 4 | |
| A | DE-A-3425579 (POLYGRAM GMBH) <br> * das ganze Dokument * | 4 | |
| A | DE-U-8914983 (DRUCKHAUS MAACK GMBH & CO) <br> * das ganze Dokument * | 1 | |

**RECHERCHIERTE SACHGEBIETE (Int. Cl.5)**

G11B33/00
B65D85/00
G11B23/00

Der vorliegende Recherchenbericht wurde für alle Patentansprüche erstellt

| Recherchenort | Abschlußdatum der Recherche | Prüfer |
|---|---|---|
| BERLIN | 07 AUGUST 1991 | CHAUMERON, B |